# EUROPÄISCHE PATENTSCHRIFT

(11) **EP 3 417 373 B1**
(45) Veröffentlichungstag und Bekanntmachung des Hinweises auf die Patenterteilung: **06.04.2022**
(21) Anmeldenummer: 17702863.6
(22) Anmeldetag: 02.02.2017
(51) Int. Cl.: G06F 9/48, G06F 9/54

(54) **VERFAHREN UND VORRICHTUNG ZUM BETREIBEN EINES STEUERGERÄTS**
METHOD AND DEVICE FOR OPERATING A CONTROLLER
PROCÉDÉ ET DISPOSITIF POUR FAIRE FONCTIONNER UN APPAREIL DE COMMANDE

(30) Priorität: 16.02.2016 DE 102016202305
(43) Veröffentlichungstag der Anmeldung: 26.12.2018
(73) Patentinhaber: Robert Bosch GmbH, 70442 Stuttgart (DE)
(72) Erfinder: ZIEGENBEIN, Dirk, 71691 Freiberg Am Neckar (DE); HAEFELE, Peter, 70469 Stuttgart-Feuerbach (DE); KRAMER, Simon, 71229 Leonberg (DE); HARTMANN, Uwe, 70839 Gerlingen (DE)
(86) Internationale Anmeldenummer: PCT/EP2017/052194
(87) Internationale Veröffentlichungsnummer: WO 2017/140504

(56) Entgegenhaltungen:
- WO-A1-2014/205467
- US-B2- 8 453 003

## Beschreibung

### Stand der Technik

Die Erfindung betrifft ein Verfahren und eine Vorrichtung zum Betreiben eines Steuergeräts gemäß den Oberbegriffen der unabhängigen Ansprüche.

Eine Patentveröffentlichung aus diesem Gebiet ist die DE 102 29 520 A1. Sie beschreibt ein Verfahren und Vorrichtung zur Steuerung von Vorgängen bei einem Fahrzeug, wobei die Vorgänge durch wenigstens ein schnelleres Aufgabenprogramm und wenigstens ein langsameres Aufgabenprogramm gesteuert werden, wobei wenigstens eine Ausgabegröße in dem wenigstens einen schnelleren Aufgabenprogramm und dem wenigstens einen langsameren Aufgabenprogramm verwendet wird und dazu von einem Speicherbereich in einen anderen Speicherbereich kopiert wird, wobei eine Ausgabegröße für das wenigstens eine langsamere Aufgabenprogramm am Ende des wenigstens einen schnelleren Aufgabenprogramms kopiert wird und/oder eine Ausgabegröße für das wenigstens eine schnellere Aufgabenprogramm zu Beginn des wenigstens eines schnelleren Aufgabenprogramms kopiert wird, wenn eine solche Ausgabegröße entsprechend für beide Aufgabenprogramme vorgesehen ist.

Die Patentveröffentlichung WO 2014/205467 A1 beschreibt ein Verfahren und Vorrichtung zur zeitrichtigen Datenübergabe zwischen zyklischen Tasks in einem verteilten Echtzeitsystem, welches Echtzeitsystem ein Echtzeitkommunikationssystem und eine Vielzahl von Rechnerknoten umfasst, wobei ein Task die Ausgabedaten der anderen Tasks aus lokalen Eingabespeicherbereichen, die von dem Echtzeitkommunikationssystem beschrieben werden, liest.

Die Patentveröffentlichung US 8 453 003 B2 beschreibt ein Kommunikationsverfahren bereitgestellt, um den Aufwand der Interprozessor-Synchronisation für eine Kommunikationsphase bei der Kommunikation untereinander zu reduzieren und die Kommunikation untereinander zu beschleunigen.

Bei Steuervorgängen im Fahrzeug liegen Betriebssysteme als Basis zur Ausführung von Steuervorgängen zugrunde. Bei Betriebssystemen, insbesondere Echtzeit-Betriebssystemen, wie sie z. B. in embedded-systems in der Automobilindustrie eingesetzt werden, sind die Funktionen oft auf mehrere Aufgabenprogramme mit unterschiedlichen Abtastzeiten aufgeteilt, damit zeitkritische Teile öfter gerechnet werden können als weniger zeitkritische Algorithmen bzw. Programme oder Programmteile. Ein Aufgabenprogramm ist eine Software-Einheit, die im Folgenden auch als Task bezeichnet wird. Dabei sorgt im Normalfall das Betriebssystem für die Sicherstellung der Datenkonsistenz. So werden von Größen, auf die in mehreren Tasks zugegriffen wird, zu geeigneten Zeitpunkten Kopien angelegt, damit sich z. B. in langsamen Tasks zwischen zwei Zugriffen der Wert nicht ändert, weil in einer schnelleren Task auf die Größe geschrieben wird.

In regelungstechnischen Anwendungen, wie z. B. beim Fahrdynamikregelsystem ESP oder auch im Rahmen einer Motor- sowie Getriebesteuerung, soll ein deterministisches Verhalten sichergestellt werden. Das bedeutet, dass bei gleichen Ausgangsbedingungen die berechneten Ergebnisse (z.B. zyklische Ausgabe von Aktor-Ansteuerungen) nur von den Eingangsgrößen (z.B. den zyklisch abgetasteten Sensorwerten) abhängig sind, unabhängig von der Verteilung der Software-Einheiten auf die verfügbaren Rechenkerne und von der Auslastung des Systems. Daneben wird durch die deterministische Kommunikation sichergestellt, dass sich die Durchlaufzeit (Latenz) einer Signalwirkkette, welche sich durch mehrere Software-Einheiten zieht, nur innerhalb eines kleinen vorgegebenen Rahmens bewegt, dass also die Jitter in den Durchlaufzeiten klein sind. Selbstverständlich muss sichergestellt werden, dass alle Aufgaben innerhalb der vorgesehenen Zeiten erledigt werden können, dass die Rechenkerne also nicht überlastet werden.

Das deterministische Verhalten kann bei Regelsystemen die Regelgüte verbessern, kann im Entwicklungsprozess Kalibrierung und Testen vereinfachen, kann die Migration auf andere Recheneinheiten, z.B. mit mehr Rechenkernen, mit optimierter Verteilung der Software-Einheiten auf die Rechenkerne wesentlich erleichtern und kann das Erreichen von Zielen der funktionalen Sicherheit auf Recheneinheiten mit einem oder mehreren Rechenkernen unterstützen. Außerdem wird sichergestellt, dass sich, z. B. im Rahmen einer modellgestützten Entwicklungsmethodik, das System funktional auf unterschiedlichen Ausführungsplattformen, z.B. Simulationsumgebung, Entwicklungsrechner, Seriensteuergerät, immer gleich verhält.

Wünschenswert ist daher ein Verfahren zur Kommunikation zwischen Tasks, das gegenüber bekannten Lösungen wesentlich weniger Rechnerressourcen, beispielsweise Speicher, Laufzeit oder Rechenzeit, benötigt und Spitzen in der Auslastung der Kommunikationskanäle reduziert.

### Offenbarung der Erfindung

Die Erfindung betrifft ein Verfahren und eine Vorrichtung gemäß den unabhängigen Ansprüchen. Dadurch werden Daten logisch zu bestimmten Zeiten zwischen den vom Betriebssystem kontrollierten Software-Einheiten übertragen, wobei die physikalische Übertragung zwischen den einzelnen Kommunikationspartnern zeitlich verteilt erfolgt. Dadurch werden wesentlich weniger Rechnerressourcen benötigt und Spitzen in der Auslastung der Kommunikationskanäle reduziert.

Der Vorteil gegenüber einem deterministischen Kommunikationsverfahren der eingangs erwähnten Art ist der Entfall eines Zwischenspeichers und die Vermeidung von mehr als einem Empfangsspeicher für die zu übertragenden Daten, wodurch bei vielen zwischen den Tasks ausgetauschten Daten erheblich Speicherplatz eingespart werden kann und damit Kosten reduziert werden.

Ein weiterer Vorteil liegt darin, dass das Senden bzw. Empfangen der Daten nicht nach jeder Ausführung des Senders bzw. Empfängers erfolgt, sondern gezielt in Abhängigkeit von den Verhältnissen der Aktivierungsperioden zwischen zwei Tasks nur zu bestimmten Zeitpunkten die Daten kommuniziert werden. Dies führt zu einer Reduktion von Buslast und Rechenzeitbedarfs.

Vorteilhafterweise kann dabei auf eine zusätzliche Task pro Kommunikationsbeziehung verzichtet werden, um Rechnerressourcen einzusparen. Außerdem können unter bestimmten Voraussetzungen durch mehrfache Verwendung derselben Eingangsspeicher weitere Ressourcen eingespart werden.

Vorteilhafterweise läuft das erste Aufgabenprogramm auf einer ersten Ausführungseinheit und das zweite Aufgabenprogramm auf einer zweiten Ausführungseinheit im Steuergerät ab. Dadurch können parallel auf unterschiedlichen Rechenkernen ablaufende Tasks miteinander Daten austauschen.

Vorteilhafterweise ist die Länge des zweiten Zeitintervalls ein ganzzahliges Vielfaches der Länge des ersten Zeitintervalls. Dadurch sind die Intervallgrenzen zwischen den Tasks die zeitgleich gestartet werden synchron.

Vorteilhafterweise werden Daten von einem dem ersten Aufgabenprogramm zugeordneten Speicherbereich direkt in einen dem zweiten Aufgabenprogramm zugeordneten Speicherbereich übertragen. Dadurch werden die Daten durch nur einen Kopiervorgang direkt vom Sender zum Empfänger übermittelt, ohne dass die Daten zunächst in einen Zwischenspeicher kopiert werden müssen. Trotz der Vermeidung von Spitzen in der Kommunikationslast und der Einsparung von Speicherplatz und Rechenzeit wird so weiterhin ein deterministisches Gesamtsystemverhalten sichergestellt.

Vorteilhafterweise wird zusätzlich ein drittes Aufgabenprogramm ausgeführt, um Daten von einem dem ersten Aufgabenprogramm zugeordneten Speicherbereich in einen Zwischenspeicher und von dem Zwischenspeicher in einen dem zweiten Aufgabenprogramm zugeordneten Speicherbereich zu übertragen. Dadurch ist die Kommunikation zwischen Tasks möglich, die nicht zeitgleich gestartet werden oder nicht ganzzahlige Vielfache Längen zueinander aufweisen.

Vorteilhafterweise weisen das erste Aufgabenprogramm und das zweite Aufgabenprogramm unterschiedliche Zykluszeiten auf, wobei eine Zykluszeit des ersten Aufgabenprogramms kleiner ist als die Zykluszeit des zweiten Aufgabenprogramms, und wobei Daten von einem dem ersten Aufgabenprogramm zugeordneten Speicherbereich in einen dem zweiten Aufgabenprogramm zugeordneten Speicherbereich innerhalb desjenigen Zyklus des ersten Aufgabenprogramms übertragen werden, welcher zeitlich im Bereich eines Zyklusendes des zweiten Aufgabenprogramms liegt. Dadurch werden die Ergebnisse der letzten Ausführung des sich schneller wiederholenden ersten Aufgabenprogramms zur Kommunikation mit dem sich langsamer wiederholenden zweiten Aufgabenprogramm verwendet. Dadurch werden die aktuellsten Ergebnisse zur Kommunikation bereitgestellt.

Vorzugsweise wird in einem ersten Betriebszustand innerhalb eines dem jeweiligen Aufgabenprogramm zugeordneten Zeitintervalls nicht von einem anderen Aufgabenprogramm auf den Speicherbereich zugegriffen, der dem jeweiligen Aufgabenprogramm zugeordneten ist, wobei in einem zweiten Betriebszustand, innerhalb dieses Zeitintervalls, nicht vom jeweiligen Aufgabenprogramm auf diesen Speicherbereich zugegriffen wird. Dadurch werden die Ausgangsgrößen nicht kopiert, bevor aktuelle Werte vorliegen bzw. die Ausgangsgrößen während des Kopiervorgangs nicht verändert.

Vorzugsweise ist einem Aufgabenprogramm ein erster Speicherbereich für Eingangsdaten zugeordnet, wobei dem Aufgabenprogramm ein zweiter Speicherbereich für Ausgangsdaten zugeordnet ist, wobei eine Zustandsinformation vorgesehen ist, die anzeigt, dass innerhalb einer Ausführung des Aufgabenprogramms vor Ende des aktuellen Zeitintervalls nicht mehr auf die Eingangsdaten zugegriffen wird und keine Änderungen an den Ausgangsdaten mehr vorgenommen wird. Die Zusatzinformation steuert den Datenzugriff. Dadurch ist der Kopiervorgang selbst "wait-free".

Weitere Vorteile und vorteilhafte Ausgestaltungen ergeben sich aus der Beschreibung sowie den Merkmalen der Ansprüche.

Die Erfindung wird im Weiteren anhand der in der Zeichnung dargestellten Figuren näher erläutert.

Es zeigen:
- Figur 1: schematisch eine Abfolge von Tasks,
- Figur 2: schematisch eine Steuerung,
- Figur 3: schematisch Kopier- bzw. Übergaberoutinen,
- Figur 4: schematisch ein Verfahren zur Steuerung mit einem Zustandsbit,
- Figur 5: schematisch ein Verfahren zur Steuerung mit mehr als zwei kommunizierenden Tasks,
- Figur 6: schematisch eine weitere Variante des Verfahrens zur Steuerung,
- Figur 7: schematisch eine nichtharmonische Kommunikation zwischen zwei Tasks.

In den Figuren sind einander entsprechende Elemente mit denselben Bezeichnungen gekennzeichnet.

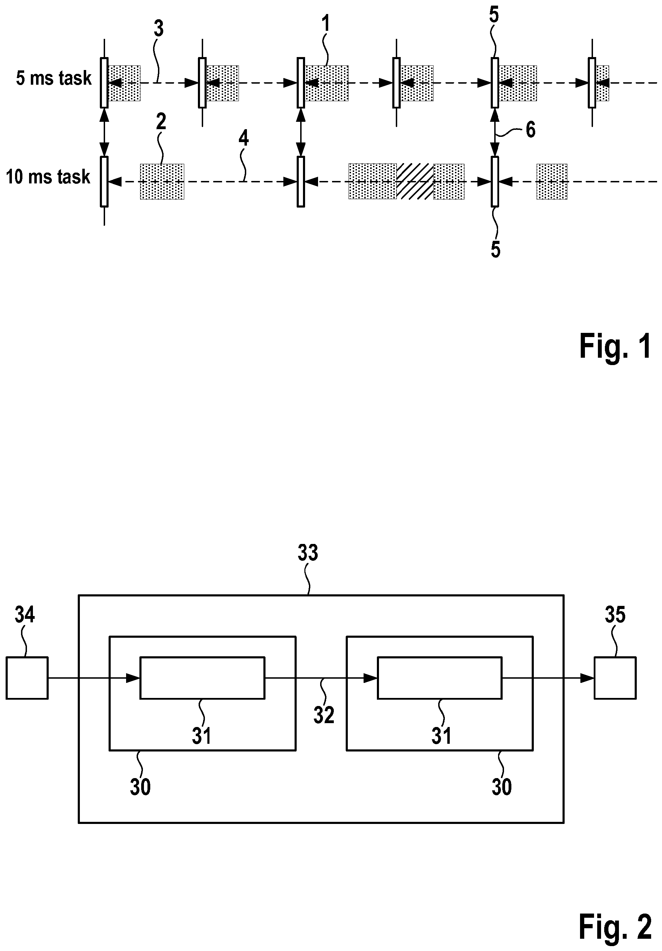

Figur 1 zeigt ein Beispielsystem mit zwei Software-Einheiten. Die Software-Einheiten sind Aufgabenprogramme, die als 5 ms Task und 10 ms Task ablaufen. In Figur 1 ist ein Beispiel für einen 5 ms Task als Rechteck 1 dargestellt. In Figur 1 ist ein Beispiel für einen 10 ms Task als Rechteck 2 dargestellt. Die Aufgabenprogramme benötigen, wie in Figur 1 dargestellt, nicht die vollen 5 ms bzw. 10 ms. Die Länge der Rechtecke 1, 2 und ihre Position auf bzw. entlang der Zeitachse t stellt beispielhaft Start, Ende und die Zeitdauer der einzelnen Berechnungen dar. Das bedeutet, die Aufgabenprogramme werden alle 5 ms bzw. 10 ms aktiviert. Die Aktivierung erfolgt nicht zwingend am Beginn eines der Tasks. Die Tasks werden innerhalb eines vorgegebenen Intervalls der Länge 5ms, dargestellt durch den Doppelpfeil 3 bzw. 10ms, dargestellt durch den Doppelpfeil 4, ausgeführt. Alle 10 ms werden an den gemeinsamen Intervallgrenzen 5 Daten zwischen den Tasks logisch ausgetauscht. Der Datenaustausch ist schematisch als Doppelpfeil 6 dargestellt. Der Datenaustausch erfolgt bi-direktional oder nur in eine der beiden Richtungen.

Die Spitze im Kommunikationsbedarf ist an den Intervallgrenzen 5, wenn die Kommunikation 6 wie gezeigt implementiert ist.

Ein Betriebssystem der eingangs genannten Art sorgt für die entsprechenden Abläufe.

Das entsprechende Verfahren setzt ein festes, ganzzahliges Verhältnis der Aktivierungsraten der einzelne Tasks voraus und ist ohne Erweiterungen nur für Recheneinheiten mit einem Rechenkern (Single·Core Prozessor) einsetzbar.

Das Beispiel von Figur 1 zeigt eine derartige Implementierung der Tasks auf demselben Rechenkern mit prioritätsgesteuerter Ausführung.

Eine andere Kommunikation zwischen Tasks verwendet einen Zwischenspeicher, in den der Sender am Taskende seine Ausgabedaten schreibt, und aus dem der Empfänger am Taskbeginn seine Eingangsdaten liest. Um Datenkohärenz zu garantieren muss der Zugriff auf den Zwischenspeicher geschützt werden, das bedeutet zum Beispiel, dass während der Sender Daten in den Zwischenspeicher schreibt, der Empfänger keine Eingangsdaten kopieren kann und warten muss.

Für die Kommunikation zwischen einer ersten und einer zweiten Task kann vorgesehen sein, dass die erste Task zur Koordination der Kommunikation eine zusätzliche Notification-Task im Kontext der zweiten Task aktiviert. Durch die Notification-Task wird der erste Task oder der zweite Task über die bevorstehende Kommunikation informiert.

Im Folgenden wird der Begriff der Logical Execution Time (LET) verwendet, mit dem das zeitliche Verhalten von Software-Einheiten, und insbesondere das Kommunikationsverhalten zwischen den Einheiten, unabhängig von der Verteilung auf verbundene Recheneinheiten und von der Leistungsfähigkeit der ausführenden Recheneinheiten, beschrieben werden kann. Dieser Begriff wurde im Buch "T.A. Henzinger, B. Horowitz, and C.M. Kirsch. Embedded control systems development with Giotto. In Proc. ACM SIGPLANWorkshop on Languages, Compilers, and Tools for Embedded Systems (LCTES). ACM, 2001" eingeführt und wird im Folgenden entsprechend verwendet.

Für die Ausführung der Software-Einheiten steht dabei jeweils ein vorgegebenes Zeitintervall zur Verfügung. Am Beginn des Zeitintervalls stehen die Eingangsgrößen der Software-Einheit zur Verfügung, und genau am Ende des Intervalls werden die von der Software-Einheit berechneten Ausgangsgrößen den anderen Software-Einheiten zu Verfügung gestellt. Die Ausführung der Software-Einheit kann zu beliebigen Zeiten innerhalb des Zeitintervalls erfolgen.

Die Kommunikation zwischen den Software-Einheiten erfolgt logisch jeweils am Beginn und am Ende der Zeitintervalle, entweder durch Kommunikation zu genau diesen Zeitpunkten (z.B. durch das Erstellen von Kopien der Ausgangsdaten in den Arbeitsbereich des Empfängers), oder durch das Anlegen von mehrfachen Speichern für die Daten, zwischen denen dann zur Laufzeit umgeschaltet wird, d.h. während der Sender in einen der Speicher schreibt, kann der Empfänger konsistente Daten aus einem vorhergehenden Sendezyklus aus einem anderen Speicher lesen.

Durch das im Folgenden beschriebene Verfahren wird die Kommunikation zwischen verschiedenen ausführbaren Software-Einheiten, d.h. den Aufgabenprogrammen bzw. Tasks, in einem Echtzeit-Regelungssystem koordiniert.

Dabei wird dafür gesorgt, dass die Kommunikation zwischen den Tasks nur zu bestimmten Zeitpunkten stattfindet, mit dem Ziel, ein deterministisches und reproduzierbares Verhalten des Gesamtsystems sicherzustellen, unabhängig von der Auslastung der ausführenden Recheneinheit.

Figur 2 zeigt schematisch ein elektronisches Steuergerät 33 mit zwei Ausführungseinheiten 30. Diese sind beispielsweise Rechenkerne oder Recheneinheiten, auf denen jeweils eine Software-Einheit 31 zyklisch ausgeführt wird, wobei Daten von der einen zur anderen Software-Einheit übertragen werden. Diese Datenübertragung ist als Pfeil mit Bezugszeichen 32 in Figur 2 dargestellt. Eine Eingangsgröße 34 oder mehrere Eingangsgrößen 34 bzw. Eingangsdaten, beispielsweise physikalische Werte, werden gemessen und im Steuergerät 33 verarbeitet. Eine Ausgabegröße 35 oder mehrere Ausgabegrößen 35 bzw. Ausgangsdaten des Steuergeräts 33 werden, beispielsweise als Stellgrößen, an die physikalische Umwelt ausgegeben. Dazu sind entsprechende nichtflüchtige Speicher oder Datenschnittstellen im Steuergerät 33 vorgesehen.

Im Folgenden wird anhand mehrerer Eingangsgrößen 34 und mehrerer Ausgabegrößen 35 beschrieben, wie die Kommunikation 32 zwischen verschiedenen Software-Einheiten 31 ressourcenschonend so ausgeführt werden kann, dass die Ausgabegrößen 35 deterministisch nur von den Eingangsgrößen 34 abhängen, unabhängig von der Verteilung der Software-Einheiten 31 auf die Ausführungseinheiten 30 und unabhängig von der Auslastung der Ausführungseinheiten 30. Dasselbe trifft auch auf eine Eingangsgröße 34 oder eine Ausgangsgröße 35 zu.

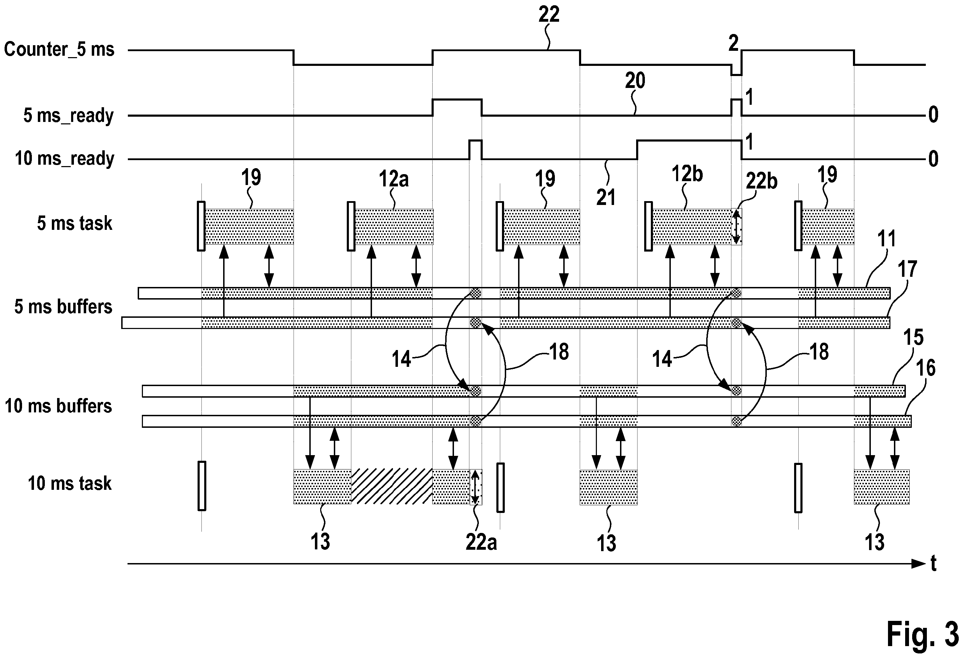

Figur 3 zeigt eine Kommunikation zwischen einer 5ms und einer 10ms Task. Ein Programmablauf stellt sicher, dass die Übertragung der Daten vom Sender zum Empfänger genau einmal pro langsameres Zeitintervall erfolgt. Durch einen Zähler-Mechanismus wird sichergestellt, dass nur nach der jeweils letzten Ausführung der schnelleren Task innerhalb des Zeitintervalls der langsameren Task eine Datenübertragung durchgeführt wird. Die Zähler counter_5ms, 5ms_ready und 10ms_ready des Zähler-Mechanismus sind in Figur 3 dargestellt und mit 22, 20 und 21 bezeichnet.

Dadurch wird das deterministische Verhalten im Sinne der "Logical Execution Time" sichergestellt.

Im Beispiel in Figur 3 hat die 5ms Task die höhere Aktivierungsrate im Vergleich zur 10ms Task. Deshalb wird nur bei jeder zweiten Ausführung 12a/b eine Datenübertragung durchgeführt, nicht aber bei den Ausführungen 19. Dazu wird jeweils am Ende der schnelleren Task ein Zähler 22 dekrementiert.

Wenn der Zählerstand des Zählers 22 Null erreicht wird die Datenübertragung zugelassen und der Zähler auf einen Wert, der dem Verhältnis von langsamerer Abtastzeit zu schnellerer Abtastzeit entspricht zurückgesetzt. Im Beispiel der Figur 3 wird der Zähler 22 auf den Wert zwei gesetzt. Die 5ms_ready Information 20 und die 10 ms_ready Information 21 stellen Betriebszustände dar. Beispielsweise bedeutet der Zustand Eins, dass die jeweilige Task bereit ist zum Datenaustausch. Beispielsweise bedeutet der Zustand Ø, dass die jeweilige Task nicht bereit ist zum Datenaustausch.

Die Tasks können auf demselben oder auf unterschiedlichen Rechenkernen ausgeführt werden.

Eine Voraussetzung für die Implementierung der Erfindung ist, dass beide Tasks Zugriff auf den für die Kommunikation relevanten Speicherbereich der jeweils anderen Task haben. Speicherbereiche sind in Figur 3 als buffer der jeweiligen Task bezeichnet.

In einem Speicherbereich 11 der 5ms Task 12a/b bzw. 19 liegen die von der 5ms Task berechneten Ausgangsgrößen, welche in den Speicherbereich 15 der 10ms Task 13 übertragen werden sollen.

Die Übertragung 14 der Daten vom Sender zum Empfänger soll dann stattfinden, wenn jede zweite 5ms Task 12a/b die Berechnung der auszugebenden Daten abgeschlossen hat und gleichzeitig die 10ms Task die Verarbeitung der im vorherigen Zyklus empfangenen Daten 15 beendet hat. Das ist spätestens dann der Fall, wenn beide Tasks beendet werden können.

Dasselbe gilt für die Kommunikation in die andere Richtung, von der 10ms Task zur 5ms Task. Die von der 10ms Task 13 berechneten Ausgabedaten 16 können zum gleiche Zeitpunkt in den Speicherbereich 17 der 5ms Task 12a/b bzw. 19 kopiert werden 18.

Um das gewünschte Verhalten zu erreichen, setzt die 5ms-Task 12a/b ein Benachrichtigungs-Bit 20 in einem von beiden Tasks ansprechbaren Speicherbereich sobald die Berechnungen innerhalb des gemeinsamen 10ms Intervalls beendet wurden und kein Zugriff auf die empfangenen Daten mehr benötigt wird, also spätestens am Ende jeder zweiten 5ms-Task 12a/b.

Analog dazu setzt die 10ms-Task 13 ein Benachrichtigungs-Bit 21 sobald die Berechnungen innerhalb einer Ausführung beendet wurden und kein Zugriff auf die empfangenen Daten mehr benötigt wird, also spätestens am Ende jeder 10ms-Task.

Die Übermittlung der Daten zwischen den Tasks erfolgt entweder am Ende einer 5ms Task 12a/b oder am Ende der 10ms Task 13, je nachdem welches Ereignis später eintritt. Im Fall 12a wird die Datenübertragung 22a in beide Richtungen von der 10ms Task durchgeführt, weil die 5ms Task 12a bereits vorher beendet wurde. Im Fall 12b erfolgt die Datenübertragung 22b durch die 5ms Task 12b, weil diese später beendet wird als die 10ms Task 13.

Die Erkennung der für die Datenübertragung zuständigen Task erfolgt anhand der Zustands-Bits 20 und 21. Jede der beiden Tasks setzt, wenn sie für den Datenaustausch bereit ist, das entsprechende Zustandsbit und fragt danach den Zustand des jeweils anderen Zustandsbits ab. Wenn beide Bits gesetzt sind wird die Kommunikation durch Aufruf einer der Kommunikationsfunktionen 22a bzw. 22b durchgeführt und die Zustandsbits werden zurückgesetzt. Beispielsweise definiert ein gesetztes Zustandsbit einen Bereich am Ende des jeweiligen Tasks.

Allgemein liegt ein Zyklus einer ersten Task zeitlich im Bereich eines Zyklusendes eines Zyklus eines zweiten Tasks, wenn ein Zyklus des ersten Tasks innerhalb des Zyklus des zweiten Tasks in einem Bereich endet, in dem der zweite Task zum Datenaustausch bereit ist. Vorzugsweise ist die Zykluszeit des ersten Tasks kürzer als die Zykluszeit des zweiten Tasks. Dann liegt ein Zyklus der ersten Task beispielsweise zeitlich im Bereich des Zyklusendes eines Zyklus des zweiten Task, wenn der erste Task nach dem Beginn dieses Zyklus des zweiten Task beginnt, und in dem Bereich endet, in dem der zweite Task in diesem Zyklus zum Datenaustausch bereit ist.

Die Zustandsbits 20 und 21 werden gegen gleichzeitigen Zugriff durch die beiden Tasks geschützt. Der eigentliche Kopier- bzw. Kommunikationsvorgang ist jedoch lock-free und wait-free.

Im Idealfall sind die für die Datenübertragung verantwortlichen Funktionen 22a und 22b identisch und werden am Ende der einen oder der anderen Task aufgerufen. Vorzugsweise werden diese Funktionen abhängig von den Kommunikationsbeziehungen werkzeugunterstützt generiert.

Die folgenden Programmbeispiele zeigen schematisch, wie das gewünschte Verhalten am Beispiel einer Kommunikation zwischen einer 5ms und einer 10ms Task erreicht werden kann:
Am Ende der Task mit der kürzeren Abtastzeit 12a/b bzw. 19 wird Programm-Code ähnlich dem folgenden eingefügt:

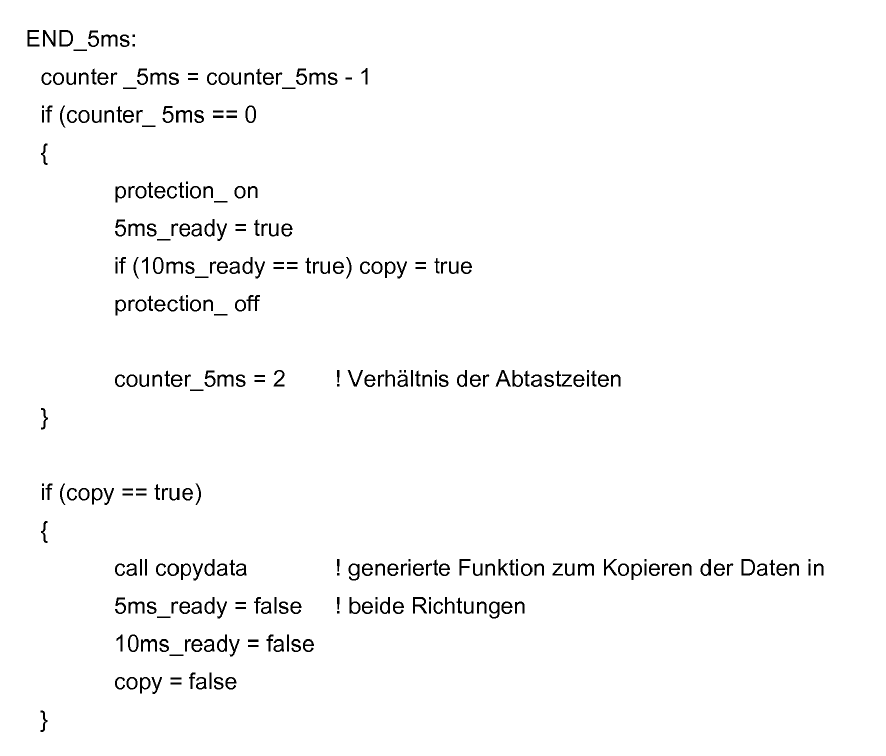

Anhand eines Zählers (counter 5_ms) wird zunächst geprüft, ob in diesem Zeitschritt Daten ausgetauscht werden sollen. Das betrifft nur die Tasks mit kürzerer Abtastzeit, ansonsten kann der Zähler entfallen.

Im Beispiel in Figur 3 benötigt die 10ms Task 13 keinen Zähler, weil in jedem Zeitschritt Daten mit der schnelleren 5ms Task 12a/b ausgetauscht werden sollen.

Sofern mit Hilfe des Zählers festgestellt wurde, dass Daten ausgetauscht werden sollen, wird geprüft, welche der Tasks für den Datenaustausch zuständig ist. Bevor die entsprechenden Zustandsbits abgefragt und manipuliert werden dürfen muss sichergestellt werden, dass nicht beide an der Kommunikation beteiligte Tasks gleichzeitig darauf zugreifen können. Dazu müssen in den meisten Fällen zusätzliche Schutzmechanismen (protection_on/protection_off) in den Programm-Code eingebaut werden um konsistente Werte für die Zustände "5ms_ready" und "10ms_ready" sicherzustellen. Durch bekannte Mechanismen des Betriebssystems wird dabei sichergestellt, dass jeweils nur eine der beiden betroffenen Software-Einheiten den durch eine "protection" geschützten Bereich betreten dürfen. Je nach Verteilung der Task auf die Ausführungseinheiten wirkt der Schutzmechanismus lokal auf nur einer Ausführungseinheit, d.h. auf dem lokalen Rechenkern (core-lokal), z.B. indem Task-Wechsel kurzzeitig verhindert werden, oder über Rechenkern-Grenzen hinweg, z.B. durch die Verwendung von Spin-Locks.

Nachdem das Steuerbit "5ms_ready" gesetzt wurde um zu signalisieren, dass die 5ms Task bereit ist Daten zu senden und zu empfangen, wird der Status der anderen Task anhand des Steuerbits "10ms_ready" geprüft. Ist dieses ebenfalls gesetzt, ist die 10ms Task bereit Daten auszutauschen und die Kommunikation kann sofort erfolgen, ansonsten wird die Kommunikation später am Ende der 10ms Task ausgeführt.

Beispielsweise werden Daten aus einem 5ms Zyklus einer ersten Software-Einheit 31 übertragen. Der 5ms Zyklus aus dem die Daten übertragen werden liegt beispielsweise zeitlich im Bereich eines Zyklusendes eines 10ms Zyklus einer zweiten Software-Einheit 31. Der Bereich des Zyklusendes der zweiten Software-Einheit 31 ist der Bereich in dem die zweite Software-Einheit 31 bereit ist, Daten auszutauschen. Der Bereich beginnt beispielsweise, sobald die Berechnungen innerhalb einer Ausführung der zweiten Software-Einheit 31 beendet wurden und kein Zugriff auf die empfangenen Daten mehr benötigt wird. Der Bereich endet beispielsweise am Ende des jeweiligen Zyklus der zweiten Software-Einheit 31.

Um die Zeit, während der Zugriffschutz (protection) aktiv ist, kurz zu halten, wird die Ausführung der Kopieraktion durch eine logische Größe "copy" gesteuert, so dass die eigentliche Kopieraktion außerhalb des geschützten Bereiches erfolgen kann.

Am Ende der Task mit der längeren Abtastzeit (13) wird Programm-Code ähnlich dem folgenden eingefügt:

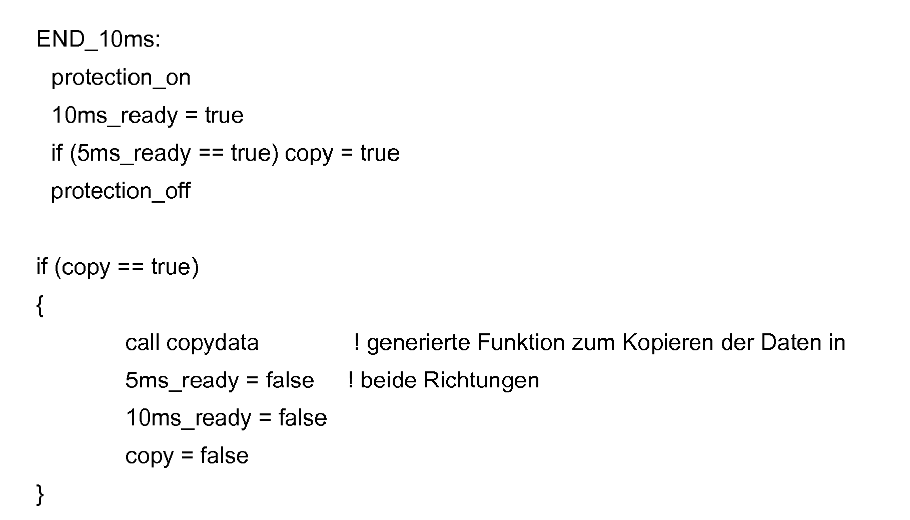

Der Programm-Code ist dem Code am Ende der 5ms Task sehr ähnlich, mit dem Unterschied, dass hier der Zähler entfällt, weil die Prüfung am Ende jeder Ausführung der langsameren Task erfolgen soll.

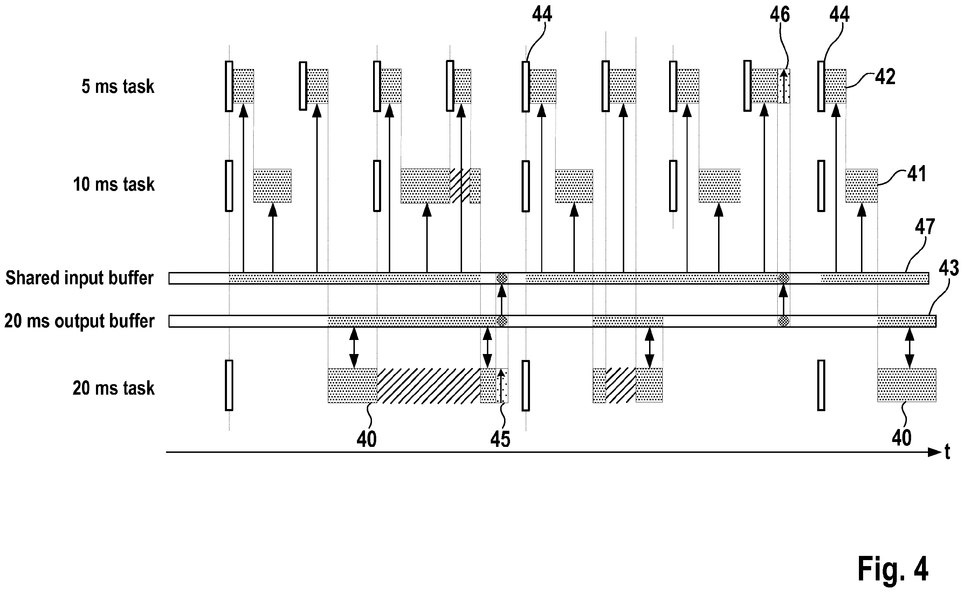

Figur 4 zeigt eine optionale Optimierung des Verfahrens zur Reduzierung des Speicher- und Rechenzeitbedarfs, welche in einem System mit mehr als 2 kommunizierenden Tasks angewendet werden kann. Die Optimierung beruht darauf, dass prinzipiell alle Daten empfangenden Tasks, sofern sie eine kleinere (oder gleiche) Periodendauer bzw. Zykluszeit als die Daten sendende Task haben, dieselben empfangenen Daten verwenden können.

Figur 4 zeigt ein Beispiel mit einer Daten sendenden 20ms Task 40 und zwei Daten empfangenden Tasks 41 und 42 mit jeweils kürzerer Periodendauer 5ms bzw. 10ms. Die 20ms Task 40 schreibt ihre Ausgabedaten in ihren Speicherbereich 43. Die schnelleren Tasks 41 und 42 benötigen Eingangsdaten von der 20ms Task, wobei zumindest einige der Eingangsdaten von beiden Tasks benötigt werden sollten, um durch diese Optimierung Ressourcen einsparen zu können.

Am Ende 44 der gemeinsamen Intervalle aller beteiligten Tasks 40, 41 und 42 wird durch ein Verfahren, ähnlich dem oben beschriebenen, festgestellt, welche der Tasks zuletzt beendet wird. Diese Task ruft dann, wie oben beschrieben, die Kommunikationsfunktion 45 bzw. 46 auf, welche die von den Empfängertasks 41 und 42 benötigten Eingangsdaten aus dem Speicherbereich 43 in den Speicherbereich 47 kopiert. Im Beispiel wird die Kommunikationsfunktion 45 am Ende des ersten gemeinsamen Intervalls von der 20ms Task 40 aufgerufen, weil diese Task später beendet wird als die Tasks 41 und 42. Am Ende des zweiten gemeinsamen Intervalls wird die 5ms Task 42 zuletzt beendet und ruft die Kommunikationsfunktion 46 auf.

Der Speicherbereich 47 enthält nun alle Ausgangsdaten der 20ms Task 40, welche von einer der beiden Empfängertasks 41 und 42 oder von beiden als Eingangsdaten benötigt werden. Beide Empfängertasks lesen ihre Eingangsdaten aus demselben Speicherbereich 47.

Dadurch wird erreicht, dass die von beiden Empfängertasks benötigten Eingangsdaten nur einmal kopiert und im Speicherbereich 47 abgelegt werden müssen, wodurch sowohl Speicherplatz als auch Rechenzeit eingespart werden kann.

Im Gegenzug wird die Logik zur Ermittlung der Task, welche die Kopieraktion ausführt, etwas komplexer, weil nun mehr als zwei mögliche Tasks dafür in Frage kommen. Unter Berücksichtigung der Verteilung der Empfängertasks auf die Recheneinheiten kann eine optimale Kombination zwischen Laufzeit und Speicherbedarf ermittelt werden.

In Figur 4 ist die Kommunikation nur in eine Richtung dargestellt. Die Kommunikationsfunktionen 45 und 46 können jedoch auch die Kommunikation in die andere Richtung, aus den Ausgabe-Speicherbereichen der schnelleren Tasks 41 und 42 zum Eingangs-Speicherbereich der 20ms Task 40 durchführen.

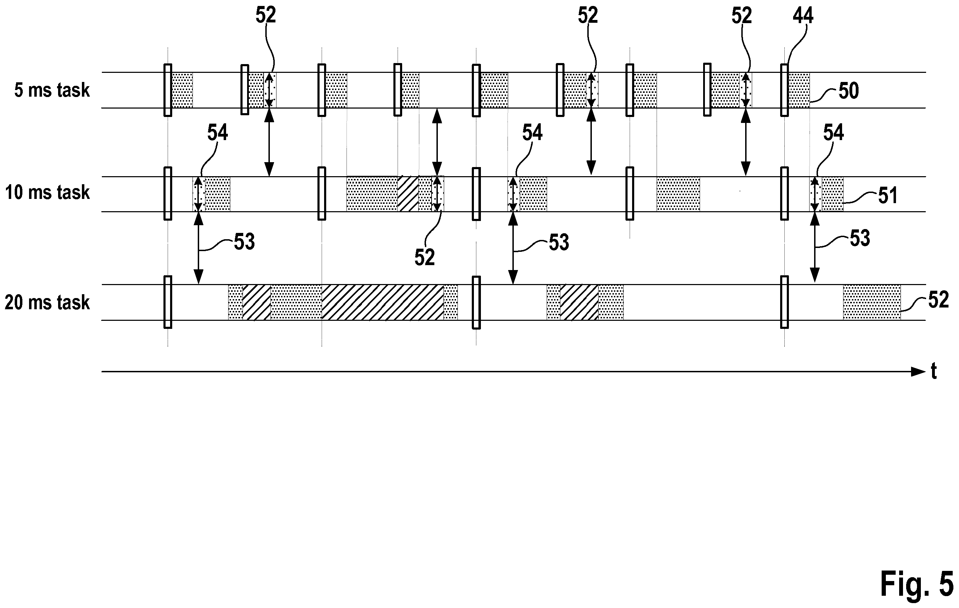

Figur 5 zeigt eine optionale Optimierung des Verfahrens, welche in einem System mit mehr als zwei kommunizierenden Tasks angewendet werden kann.

Die Optimierung erlaubt es unter Berücksichtigung der Software Verteilung, des Scheduling und/oder der kopierten Daten Kopieroperationen vom Ende eines Intervalls an den Beginn des nächsten Intervalls zu verschieben.

Dadurch werden Lastspitzen bei der Überlagerung verschiedener Intervalllängen gezielt vermieden und die Last auf darunter liegende Bussystem zeitlich weiter entzerrt.

In Figur 5 kommuniziert eine 5ms Task 50 mit einer 10ms Task 51 jeweils am Ende des Intervalls, wie oben beschrieben.

Die Kommunikationsfunktion 52 wird wie beschrieben jeweils am Ende der im gemeinsamen Intervall zuletzt beendeten Task aufgerufen.

Die Kommunikation 53 zwischen der 10ms Task 51 und der 20ms Task 52 wird aus den genannten Gründen an den Beginn des neuen Intervalls verschoben. Zu Beginn jeder zweiten 10ms Task 51 wird die Kommunikationsfunktion 54 aufgerufen, welche die im vorangegangenen Intervall berechneten Werte zwischen den Tasks in beide Richtungen jeweils in die entsprechenden Speicherbereiche (hier nicht dargestellt) kopiert.

Dies funktioniert ohne weitere Maßnahmen wenn sichergestellt ist, dass der Kommunikationspartner, also in diesem Fall die 20ms Task 52, erst ausgeführt wird, nachdem die Kommunikation abgeschlossen ist. Das ist automatisch dann der Fall, wenn bei prioritätsbasiertem Scheduling beide Tasks auf derselben Ausführungseinheit aktiviert werden, und die Kommunikation von der höherprioren Task, d.h. in diesem Fall von der schnelleren 10ms Task, ausgeführt wird.

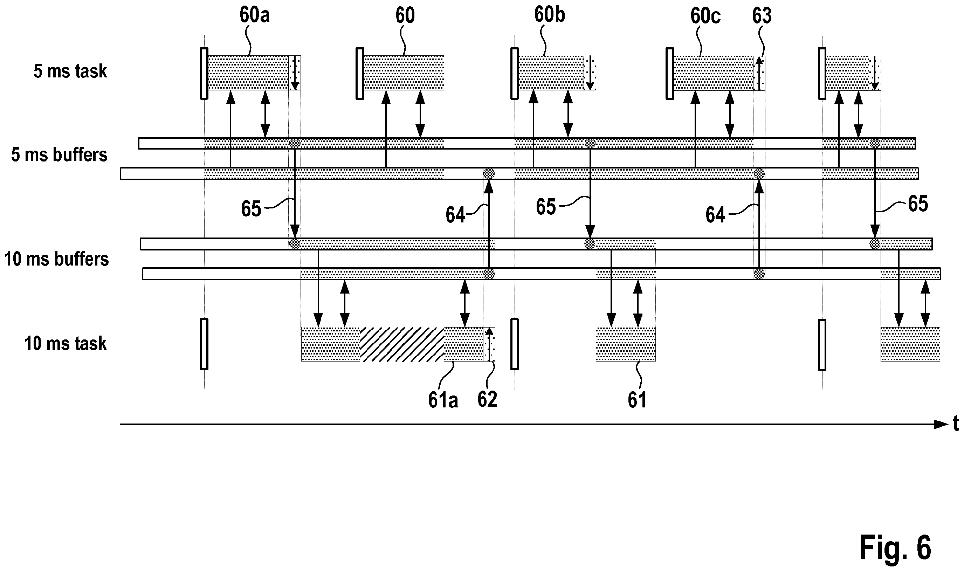

Figur 6 zeigt eine optionale Variante des Verfahrens, dessen Verhalten vom oben beschriebenen "Logical Execution Time" Schema wie folgt abweicht.

Das Ziel ist dabei, die Signallaufzeiten (Latenzen) innerhalb einer Signalwirkkette zu reduzieren, wobei weiterhin ein deterministisches Verhalten beibehalten wird.

Wie in Figur 3 dargestellt, kommunizieren hier eine 5ms Task 60 mit einer 10ms Task 61. Die Kommunikation 64 von der langsameren Task 61 zur schnelleren Task 60 erfolgt weiterhin am Ende des gemeinsamen Intervalls und wird von der jeweils als letzte beendeten Task 61a bzw. 60c durch Aufruf der Kommunikationsfunktionen 62 bzw. 63 ausgeführt.

Die Kommunikation 65 von der schnelleren 5ms Task 60 zur 10ms Task 61 erfolgt nun jedoch nicht mehr am Ende des gemeinsamen Intervalls, sondern direkt nach der ersten Ausführung der schnelleren 5ms Task 60a bzw. 60b im gemeinsamen Intervall.

Voraussetzung für diese Art der Kommunikation ist, dass die langsamere Empfängertask 61a bzw. 61 erst ausgeführt wird wenn die Kommunikation abgeschlossen wurde, also nach Beendigung der Task 60a bzw. 60b. Die ist bei prioritätsgesteuertem Rate-Monotonic-Scheduling automatisch der Fall, wenn beide Tasks auf derselben Ausführungseinheit, d.h. demselben Rechenkern (core), ausgeführt werden, weil in diesem Fall die schnelleren Tasks eine höhere Ausführungspriorität haben als die langsameren Tasks.

Wenn die Tasks auf unterschiedlichen Ausführungseinheiten abgearbeitet werden, kann die langsamere Task 61a bzw. 61 am Ende der Sendetask 60a bzw. 60b aktiviert werden.

Durch diese Variante der Erfindung wird erreicht, dass für Signalwirkketten, die auf dem Weg z.B. von einem Sensor, beispielsweise Sensor 34 in Figur 1, zu einem Aktor, beispielsweise Aktor 35 in Figur 1, durch eine schnelle und danach eine langsamere Task verlaufen, die Durchlaufzeit (Latenz) verringert wird, was z.B. für regelungstechnische Anwendungen vorteilhaft sein kann.

In dieser Variante werden die Tasks unter Berücksichtigung von Abhängigkeiten zwischen den Ausführungszeiträumen innerhalb der Intervalle, auf die Ausführungseinheiten verteilt.

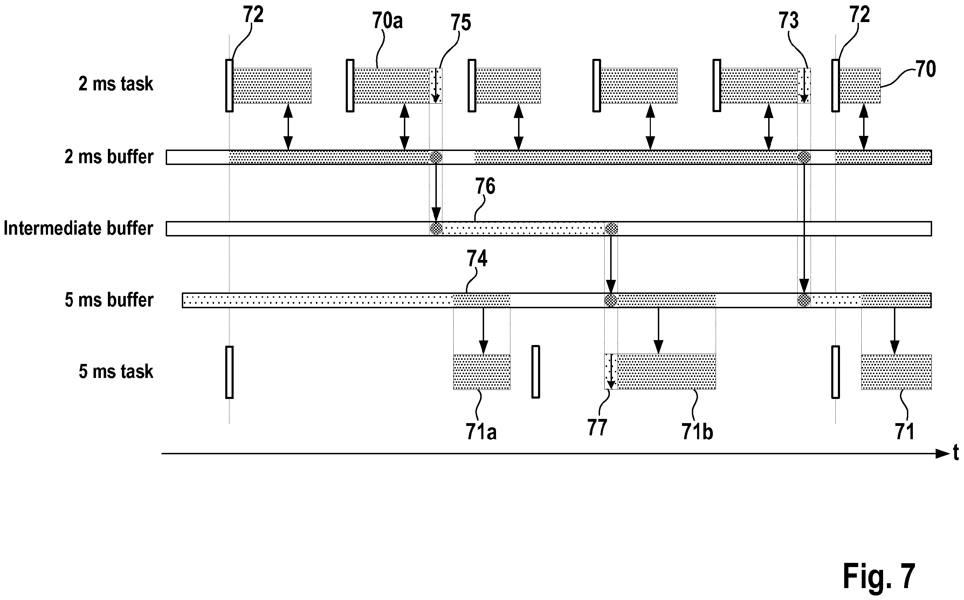

Figur 7 zeigt die Kommunikation von einer 2ms Task 70 zu einer 5ms Task 71. Die Länge der 5ms Task 71 ist kein ganzzahliges Vielfaches der Länge der 2ms Tasks. Im Folgenden wird Kommunikation zwischen derartigen Tasks, als nichtharmonische Kommunikation bezeichnet.

Oben beschriebene Verfahren gehen von regelmäßig auftretenden gemeinsamen Intervallgrenzen aus, an denen logisch kommuniziert wird. Bei der nichtharmonischer Kommunikation, z.B. einer 2ms und einer 5ms Task, ist das nur alle 10ms der Fall. An diesen gemeinsamen Intervallgrenzen 72 wird mit einem der oben beschriebenen Verfahren am Ende des gemeinsamen Intervalls durch die zuletzt beendete Task die Kommunikation 73 durchgeführt.

Die Berechnungsergebnisse der zweiten 2ms Task im gemeinsamen Intervall sollen ebenfalls deterministisch an die 5ms Task kommuniziert werden, jedoch gibt es in diesem Fall keine gemeinsame Intervallgrenze. Die Werte können nicht direkt in den Eingangsspeicher 74 der 5ms Task kopiert werden, weil dieser noch von der ersten 5ms Task 71a für lesende Zugriffe blockiert ist.

Die zweite 2ms Task 70a schreibt deshalb am Taskende durch Aufruf einer Kommunikationsfunktion 75 die zu kommunizierenden Werte zunächst in einen Zwischenspeicher 76. Die zweite 5ms Task 71b kopiert dann am Taskbeginn durch Aufruf einer Kommunikationsfunktion 77 die Werte aus dem Zwischenspeicher 76 in ihren Eingangsspeicher 74.

Die Kommunikation in die andere Richtung, von der 5ms Task zur 2ms Task funktioniert äquivalent. Die erste 5ms Task kopiert die Werte in einen andern Zwischenspeicher. Die vierte 2ms Task, d.h. die erste 2ms Task die nach sicherer Beendigung der ersten 5ms Task im Intervall von 6ms - 8ms aktiviert wird, kopiert die Daten aus dem Zwischenspeicher in ihren Eingangsspeicher.

Die Kommunikation am gemeinsamen Intervallende verläuft wie auch die Kommunikation in anderer Richtung nach einem der oben beschriebenen Verfahren.

Die Aufgabenprogramme werden vorzugsweise zyklisch wiederholt. Die Intervalle entsprechen dann Zykluszeiten. Die Kommunikation erfolgt vorzugsweise ebenfalls zyklisch.

Die Kommunikationspartner können in den oben beschriebenen Verfahren auf dem gleichen oder auf unterschiedlichen Rechenkernen ausgeführt werden.

Das Setzen der Zustandsbits 20 bzw. 21 erfolgt vorzugsweise dann, wenn innerhalb einer Ausführung der Task nicht mehr auf die Eingangsdaten 17 bzw. 15 zugegriffen wird und keine Änderungen an den Ausgangsdaten 11 bzw. 16 mehr vorgenommen wird, also zu einem Zeitpunkt bereits vor Beendigung der Task. Dadurch wird beispielsweise der Bereich am Zyklusende der entsprechenden Software-Einheit 31 festgelegt.

Nachstehend sind die Vorteile des erfindungsgemäßen Prinzips zusammengefasst:
1. Das Verfahren aus DE 102 29 520 A1 wird so erweitert, dass es auch für Recheneinheiten mit mehreren Rechenkernen, z.B. Multi-Core Prozessoren, einsetzbar ist, unter Beibehaltung des deterministischen und reproduzierbaren Verhaltens. Dafür eignet sich das Konzept der "Logical Execution Time".
2. Das Verfahren stellt die Kohärenz aller zwischen zwei Tasks übertragenen Daten sicher, das heißt alle am Beginn der Empfängertask bereitstehenden Daten sollen aus derselben Ausführung der Sendertask stammen, und die Eingangsdaten sollen sich nicht ändern während die Empfängertask darauf zugreift.
3. Das Verfahren unterstützt von einem Betriebssystem kontrollierte Software-Einheiten (Tasks), deren Aktivierungsraten in einem festen, ganzzahligen Verhältnis zueinander stehen (s. Figur 1). Dabei können auch mehrere Tasks mit gleicher Aktivierungsrate vorhanden sein.
4. Das Verfahren belastet die Kommunikationskanäle (z.B. Busse) weniger, als die Kommunikation genau an den Intervallgrenzen wie in Figur 1 dargestellt.
5. Um die verfügbare Rechenleistung besser nutzen zu können, ist das Verfahren weitgehend "wait-free", das bedeutet, dass die Ausführung keiner der Kommunikationspartner für eine nennenswerte Zeit blockiert wird, z. B. um die Kohärenz gemeinsam genutzter Speicherbereiche sicherzustellen.
6. Das Verfahren ist ohne Erweiterung der heute in der Automobil-Domäne üblicherweise eingesetzten Betriebssysteme (z.B. AUTOSAR-OS) implementierbar.
7. Das Verfahren ist so optimiert, dass zusätzliche "Notification"-Tasks eingespart werden können, um benötigte Rechnerressourcen (Speicher, Laufzeit) zu reduzieren.
8. Das Verfahren ist so optimiert, dass unter bestimmten Voraussetzungen durch eine gemeinsame Nutzung von empfangenen Daten durch mehrere Empfänger Ressourcen (Speicher, Laufzeit) eingespart werden können.
9. Die Kommunikation kann bidirektional durchgeführt werden, das heißt in den Zeiträumen wenn eine Kommunikation zwischen zwei Tasks durchgeführt wird kann diese in beide Richtungen erfolgen, sofern dafür Bedarf besteht. Dadurch wird Ausführungs-Infrastruktur (Funktionen, Zähler, Zustandsspeicher) nur einmal pro Task-Paar benötigt, nicht jedoch pro Kommunikationsrichtung.
10. Das Verfahren ist optional so optimiert, dass unter Berücksichtigung der Software Architektur und Software Verteilung Lastspitzen vermieden und Ressourcen (Speicher, Laufzeit) optimal genutzt werden.
11. Das Verfahren bietet optional die Möglichkeit, die Latenzen einer sich über mehrere Tasks erstreckenden Signalwirkkette zu reduzieren.
12. Das Verfahren ist optional für die deterministische Kommunikation zwischen Tasks mit nicht harmonischen Intervallen erweiterbar sein, z.B. für die Kommunikation zwischen einer 2ms und einer 5ms Task.

## Patentansprüche

1. Verfahren zum Betreiben eines Steuergeräts (33),
insbesondere für ein Kraftfahrzeug,
wobei das Steuergerät (33) wenigstens eine zur Ausführung von Aufgabenprogrammen (31) ausgebildete Ausführungseinheit (30) aufweist,
wobei zumindest zeitweise ein erstes Aufgabenprogramm (31) und ein zweites Aufgabenprogramm (31) ausgeführt werden,
wobei das erste Aufgabenprogramm (31) am Ende eines ersten vorgegebenen Zeitintervalls Daten (32) für das zweite Aufgabenprogramm (31) bereitstellt,
**dadurch gekennzeichnet, dass**
eine Übertragung der Daten vom ersten Aufgabenprogramm (31) zum zweiten Aufgabenprogramm (31)
nach einer jeweils letzten Ausführung des ersten Aufgabenprogramms (31) innerhalb eines vorgegebenen zweiten Zeitintervalls für eine Ausführung des zweiten Aufgabenprogramms (31) erfolgt,
wobei das zweite Zeitintervall länger als das erste Zeitintervall ist.

2. Verfahren nach Anspruch 1, **dadurch gekennzeichnet, dass** das erste Aufgabenprogramm (31) auf einer ersten Ausführungseinheit (30) und das zweite Aufgabenprogramm auf einer zweiten Ausführungseinheit (30) im Steuergerät (33) ablaufen.

3. Verfahren nach einem der Ansprüche 1 oder 2, **dadurch gekennzeichnet, dass** die Länge des zweiten Zeitintervalls ein ganzzahliges Vielfaches der Länge des ersten Zeitintervalls ist.

4. Verfahren nach einem der vorherigen Ansprüche, **dadurch gekennzeichnet, dass** Daten von einem dem ersten Aufgabenprogramm (31) zugeordneten Speicherbereich direkt in einen dem zweiten Aufgabenprogramm (31) zugeordneten Speicherbereich übertragen werden.

5. Verfahren nach einem der vorstehenden Ansprüche, **dadurch gekennzeichnet, dass** zusätzlich ein drittes Aufgabenprogramm (75, 77) ausgeführt wird, um Daten von einem dem ersten Aufgabenprogramm (31) zugeordneten Speicherbereich in einen Zwischenspeicher (76) und von dem Zwischenspeicher (76) in einen dem zweiten Aufgabenprogramm (31) zugeordneten Speicherbereich zu übertragen.

6. Verfahren nach einem der vorstehenden Ansprüche, **dadurch gekennzeichnet, dass** das erste Aufgabenprogramm (31) und das zweite Aufgabenprogramm (31) unterschiedliche Zykluszeiten aufweisen, wobei eine Zykluszeit des ersten Aufgabenprogramms (31) kleiner ist als die Zykluszeit des zweiten Aufgabenprogramms (31), und wobei Daten von einem dem ersten Aufgabenprogramm (31) zugeordneten Speicherbereich in einen dem zweiten Aufgabenprogramm (31) zugeordneten Speicherbereich (114) innerhalb desjenigen Zyklus des ersten Aufgabenprogramms (31) übertragen werden, welcher zeitlich im Bereich eines Zyklusendes des zweiten Aufgabenprogramms (31) liegt.

7. Verfahren nach einem der vorstehenden Ansprüche, **dadurch gekennzeichnet, dass** in einem ersten Betriebszustand innerhalb eines dem jeweiligen Aufgabenprogramm (31) zugeordneten Zeitintervalls nicht von einem anderen Aufgabenprogramm (31) auf den Speicherbereich zugegriffen wird, der dem jeweiligen Aufgabenprogramm (31) zugeordneten ist, wobei in einem zweiten Betriebszustand, innerhalb dieses Zeitintervalls, nicht vom jeweiligen Aufgabenprogramm (31) auf diesen Speicherbereich zugegriffen wird.

8. Verfahren nach einem der vorstehenden Ansprüche, **dadurch gekennzeichnet, dass** einem Aufgabenprogramm (31) ein erster Speicherbereich für Eingangsdaten (17, 15) zugeordnet ist, wobei dem Aufgabenprogramm (31) ein zweiter Speicherbereich für Ausgangsdaten (11, 16) zugeordnet ist, wobei eine Zustandsinformation (20, 21) vorgesehen ist, die anzeigt, dass innerhalb einer Ausführung des Aufgabenprogramms (31) vor Ende des aktuellen Zeitintervalls nicht mehr auf die Eingangsdaten (17, 15) zugegriffen wird und keine Änderungen an den Ausgangsdaten (11, 16) mehr vorgenommen wird.

9. Steuergerät (33), insbesondere für ein Kraftfahrzeug, ausgebildet zur Ausführung des Verfahrens nach einem der Ansprüche 1 bis 8.

## Claims

1. Method for operating a control unit (33),
in particular for a motor vehicle,
wherein the control unit (33) has at least one execution unit (30) designed to execute task programs (31),
wherein a first task program (31) and a second task program (31) are executed at least intermittently, wherein the first task program (31) provides data (32) for the second task program (31) at the end of a first predefined interval of time,
**characterized in that**
the data are transmitted from the first task program (31) to the second task program (31)
after a respective last execution of the first task program (31), within a predefined second interval of time, for execution of the second task program (31),
wherein the second interval of time is longer than the first interval of time.

2. Method according to Claim 1, **characterized in that** the first task program (31) runs on a first execution unit (30) and the second task program runs on a second execution unit (30) in the control unit (33).

3. Method according to either of Claims 1 and 2, **characterized in that** the length of the second interval of time is an integer multiple of the length of the first interval of time.

4. Method according to one of the preceding claims, **characterized in that** data are transmitted from a memory area assigned to the first task program (31) directly into a memory area assigned to the second task program (31).

5. Method according to one of the preceding claims, **characterized in that** a third task program (75, 77) is additionally executed in order to transmit data from a memory area assigned to the first task program (31) into a buffer (76) and from the buffer (76) into a memory area assigned to the second task program (31).

6. Method according to one of the preceding claims, **characterized in that** the first task program (31) and the second task program (31) have different cycle times, wherein a cycle time of the first task program (31) is shorter than the cycle time of the second task program (31), and wherein data are transmitted from a memory area assigned to the first task program (31) into a memory area (114) assigned to the second task program (31) within that cycle of the first task program (31) which is in the region of the end of a cycle of the second task program (31) in terms of time.

7. Method according to one of the preceding claims, **characterized in that**, in a first operating state, the memory area assigned to the respective task program (31) is not accessed by another task program (31) within an interval of time assigned to the respective task program (31), wherein, in a second operating state, this memory area is not accessed by the respective task program (31) within this interval of time.

8. Method according to one of the preceding claims, **characterized in that** a first memory area for input data (17, 15) is assigned to a task program (31), wherein a second memory area for output data (11, 16) is assigned to the task program (31), wherein an item of status information (20, 21) is provided and indicates that the input data (17, 15) are no longer accessed and changes are no longer made to the output data (11, 16) during execution of the task program (31) before the end of the current interval of time.

9. Control unit (33), in particular for a motor vehicle, designed to carry out the method according to one of Claims 1 to 8.

## Revendications

1. Procédé permettant de faire fonctionner un appareil de commande (33),
en particulier pour un véhicule automobile,
l'appareil de commande (33) présentant au moins une unité d'exécution (30) réalisée pour exécuter des programmes de tâches (31),
un premier programme de tâches (31) et un deuxième programme de tâches (31) étant exécutés au moins temporairement,
le premier programme de tâches (31) fournissant à la fin d'un premier intervalle de temps prédéfini des données (32) pour le deuxième programme de tâches (31),
**caractérisé en ce qu'**une transmission des données du premier programme de tâches (31) au deuxième programme de tâches (31)
a lieu respectivement après une dernière exécution du premier programme de tâches (31) dans un deuxième intervalle de temps prédéfini pour une exécution du deuxième programme de tâches (31),
le deuxième intervalle de temps étant plus long que le premier intervalle de temps.

2. Procédé selon la revendication 1, **caractérisé en ce que** le premier programme de tâches (31) fonctionne sur une première unité d'exécution (30) et le deuxième programme de tâches fonctionne sur une deuxième unité d'exécution (30) dans l'appareil de commande (33).

3. Procédé selon l'une quelconque des revendications 1 et 2, **caractérisé en ce que** la longueur du deuxième intervalle de temps est un multiple entier de la longueur du premier intervalle de temps.

4. Procédé selon l'une quelconque des revendications précédentes, **caractérisé en ce que** des données sont transmises d'une zone de mémoire associée au premier programme de tâches (31) directement à une zone de mémoire associée au deuxième programme de tâches (31).

5. Procédé selon l'une quelconque des revendications précédentes, **caractérisé en ce qu'**en plus, un troisième programme de tâches (75, 77) est exécuté pour transmettre des données d'une zone de mémoire associée au premier programme de tâches (31) à une mémoire tampon (76), et de la mémoire tampon (76) à une zone de mémoire associée au deuxième programme de tâches (31).

6. Procédé selon l'une quelconque des revendications précédentes, **caractérisé en ce que** le premier programme de tâches (31) et le deuxième programme de tâches (31) présentent différents temps de cycle, un temps de cycle du premier programme de tâches (31) étant inférieur au temps de cycle du deuxième programme de tâches (31), et des données étant transmises d'une zone de mémoire associée au premier programme de tâches (31) à une zone de mémoire (114) associée au deuxième programme de tâches (31) à l'intérieur du cycle du premier programme de tâches (31) qui se trouve temporellement au niveau d'une fin de cycle du deuxième programme de tâches (31) .

7. Procédé selon l'une quelconque des revendications précédentes, **caractérisé en ce que** dans un premier état de fonctionnement à l'intérieur d'un intervalle de temps associé au programme de tâches (31) respectif, aucun autre programme de tâches (31) n'accède à la zone de mémoire qui est associée au programme de tâches (31) respectif, dans lequel, dans un deuxième état de fonctionnement, à l'intérieur de cet intervalle de temps, le programme de tâches (31) respectif n'accède pas à cette zone de mémoire.

8. Procédé selon l'une quelconque des revendications précédentes, **caractérisé en ce qu'**un programme de tâches (31) est associé à une première zone de mémoire pour des données d'entrée (17, 15), le programme de tâches (31) étant associé à une deuxième zone de mémoire pour des données de sortie (11, 16), une information d'état (20, 21) étant prévue qui indique qu'à l'intérieur d'une exécution du programme de tâches (31) avant la fin de l'intervalle de temps actuel, on n'accède plus aux données d'entrée (17, 15) et aucun changement n'est plus effectué sur les données de sortie (11, 16).

9. Appareil de commande (33), en particulier pour un véhicule automobile, réalisé pour exécuter le procédé selon l'une quelconque des revendications 1 à 8.
